# EUROPÄISCHE PATENTSCHRIFT

(11) **EP 0 674 604 B1**
(45) Veröffentlichungstag und Bekanntmachung des Hinweises auf die Patenterteilung: **19.03.1997**
(21) Anmeldenummer: 94902769.2
(22) Anmeldetag: 14.12.1993
(51) Int. Cl.: C02F 11/12

(54) **VERFAHREN UND ANLAGE ZUM BEHANDELN VON SCHLAMM**
SLUDGE TREATMENT PROCESS AND PLANT
PROCEDE ET INSTALLATION DE TRAITEMENT DE BOUES

(30) Priorität: 17.12.1992 DE 4242747
(43) Veröffentlichungstag der Anmeldung: 04.10.1995
(73) Patentinhaber: STEAG Aktiengesellschaft, D-45117 Essen (DE); DEUTSCHE BABCOCK ANLAGEN GMBH, 46049 Oberhausen (DE)
(72) Erfinder: THIEMANN, Heinz, D-45133 Essen (DE); BRAUWEILER, Helmut, D-44536 Lünen (DE); RUPPERT, Ivan, D-45307 Essen (DE); BUBLIES, Jörg, D-47800 Krefeld (DE); MÖLLER, Burkhard, D-09600 Kleinwaltersdorf (DE)
(86) Internationale Anmeldenummer: EP9303533
(87) Internationale Veröffentlichungsnummer: WO9413592

(56) Entgegenhaltungen:
- EP-A- 0 396 852
- EP-A- 0 458 221
- EP-A- 0 491 247
- EP-A- 0 543 133
- CH-A- 641 133

## Beschreibung

Die Erfindung betrifft ein Verfahren sowie eine Anlage zum Behandeln von Schlamm, insbesondere von Klärschlamm, wobei mechanisch vorentwässertem Dickschlamm Trockenschlamm beigemischt, das Gemisch zu Trockenschlamm getrocknet und ein Teil des ungekühlten Trockenschlamms in temperaturgesteuerter Menge zur Mischung mit dem Dickschlamm rezirkuliert wird.

Eine derartige Schlammtrocknung dient dazu, den Klärschlamm derart zu konditionieren, daß er später - ggf. nach Zwischenlagerung - entsorgt werden kann, z.B. durch Verbrennen in einer Müllverbrennungsanlage oder als Düngemittel in der Landwirtschaft.

Der Klärschlamm fällt in der Regel mit einem Trockensubstanzgehalt von ca. 2-5 Masse-% an. Die mechanische Vorentwässerung erhöht den Trockensubstanzgehalt auf ca. 20-30 Masse-%. Dieser Dickschlamm kann nicht ohne weiteres der eigentlichen Trocknung unterworfen werden. Vielmehr setzt die Trocknung einen Trockensubstanzgehalt von ca. 50-80 Masse-% voraus. Daher mischt man den Dickschlamm mit bereits getrocknetem Schlamm. Bei der Trocknung erhöht sich der Trockensubstanzgehalt des Gemisches auf ca. 95 Masse-%. Dabei steigt die Temperatur des Trockenschlamms bis auf ca. 120°C an. Diese Temperatur muß vor dem Abtransport des Trockenschlamms auf ca. 50-70°C gesenkt werden, da sonst eine unzulässig hohe Gefahr der Selbstentzündung besteht.

Es wurde gefunden, daß die bisherige Schlammbehandlung in ihrer Wirtschaftlichkeit verbesserungsbedürftig ist.

Dementsprechend liegt der Erfindung die Aufgabe zugrunde, die Möglichkeit für eine Schlammbehandlung mit erhöhtem Wirkungsgrad zu schaffen.

Zur Lösung dieser Aufgabe ist das Verfahren nach der Erfindung dadurch gekennzeichnet, daß der Trockensubstanzgehalt des Dickschlamms durch Messung der Temperatur des zu trocknenenden Gemisches erfaßt wird und daß zur Kompensation von Schwankungen im Trockensubstanzgehalt des Dickschlamms die Steuerung der Rezirkulationsmenge des ungekühlten Trockenschlamms in Abhängigkeit von der erfaßten Temperatur des zu trocknenden Gemisches durchgeführt wird.

Der Erfindung liegt die Erkenntnis zugrunde, daß für die Zumischung zum Dickschlamm nicht nur das eigentliche Fertigprodukt, nämlich der gekühlte Trockenschlamm in Frage kommt, sondern bereits das Zwischenprodukt, nämlich der ungekühlte Trockenschlamm, der direkt im Anschluß an die eigentliche Trocknung abgezweigt werden kann. Hieraus resultieren ganz beträchtliche Ersparnisse.

Für die sog. Rückpuderung, nämlich die Beimischung des Trockenschlamms zum Dickschlamm werden ganz erhebliche Trockenschlammengen rezirkuliert. Je nach Feststoffgehalt des eingesetzten Dickschlamms befindet sich ständig das 7-10-fache der als Fertigprodukt abgeführten Trockensubstanzmasse im Umlauf. Da sich erfindungsgemäß die Kühlung auf den als Fertigprodukt abgeführten Trockenschlamm beschränken kann, sinkt die diesbezügliche Kühlleistung auf ca. 10-20% der sonst erforderlichen Leistung. Hinzu kommt, daß das Wärmepotential des rezirkulierten Trockenschlamms nicht abgeführt werden muß, sondern im Prozeß erhalten bleibt.Das Trocknen erfordert also weniger Wärmezufuhr.

Insgesamt ergibt sich eine beträchtliche Ersparnis nicht nur der Investitionskosten, sondern auch der Betriebskosten.

Der Trockensubstanzgehalt des Dickschlamms ist nicht konstant, sondern unterliegt Schwankungen. Diese Schwankungen konnten bisher nicht automatisch ausgeglichen werden. Der Erfindung liegt die Erkenntnis zugrunde, daß bei Zumischung heißen Trockenschlamms zum Dickschlamm dessen Trockensubstanzgehalt die Temperatur des Gemisches beeinflußt. Durch Erfassung der Temperatur des Gemisches können also etwaige Schwankungen des Trockensubstanzgehaltes des Dickschlamms erkannt und kompensiert werden. Als Folge ergeben sich konstante Arbeitsbedingungen des eigentlichen Trocknungsschrittes, so daß dieser auf optimalem Wirkungsgrad gehalten werden kann. Die hierfür erforderlichen Maßnahmen, nämlich die Erfassung der Gemischtemperatur und die entsprechende Steuerung der Trockenschlammdosierung, sind denkbar einfach. Bei einer Rezirkulation von gekühltem Trockenschlamm ändert sich die Temperatur des Gemisches nicht wesentlich, so daß sie die Funktion der Führungsgröße nicht übernehmen kann.

Vorzugsweise wird dem Dickschlamm bzw. dem zu trocknenden Gemisch außerdem Staub, insbesondere Feinstaub beigemischt, der bei der Schlammbehandlung, vor allem bei der Trocknung und bei der Weiterbehandlung des Trockenschlamms anfällt. Die Rückpuderung erfolgt also unter Einsatz einer Trockensubstanz, die ansonsten einer gesonderten Weiterbehandlung bedürfte.

Vorteilhafterweise wird das Gemisch in einer Wirbelschicht oder einer Trommel derart getrocknet, daß der Trockenschlamm direkt nach der Trocknung einen Feinstaubgehalt von < 20 Masse-% < 500µ aufweist, um den Explosionsschutz zu fördern.

Dabei ist es ganz besonders vorteilhaft, daß der Staub aus dem Kreislaufmedium der Wirbelschicht oder Trommel entnommen und dem Dickschlamm bzw. dem zu trocknenden Gemisch beigemischt wird. Bei dem Kreislaufmedium handelt es sich bevorzugt um einen Teil der bei der Trocknung anfallenden, entstaubten Brüden, der rezirkuliert wird.

Ferner ist es besonders vorteilhaft, daß bei Durchführung der Kühlung in einer Wirbelschicht der Staub aus dem Wirbelschichtmedium entnommen und damit eine weitere Reduzierung des Feinstaubgehaltes erreicht wird. In der Regel wird der Dickschlamm zwischengelagert, wobei die als Kaltluft anfallende Aspirationsluft aus den Dickschlammbunkern abgesaugt wird. Als Wirbelschichtmedium für die Kühlung wird daher bevorzugt die aus dem mechanisch vorentwässerten Dickschlamm anfallende Aspirationsluft verwendet, sofern deren Methangehalt nicht zu hoch ist.

Im übrigen sind für die Trocknung und für die Kühlung auch andere als Wirbelschicht- oder Trommelverfahren anwendbar, wenn auch nicht ganz so günstig.

Die erfindungsgemäße Schlammbehandlungsanlage umfaßt mindestens einen Mischer (3), der eine Zuleitung (4) für mechanisch vorentwässerten Dickschlamm und eine Zuleitung (5) für Trockenschlamm aufweist, einem dem Mischer (3) nachgeschalteten Trockner (1), einer Dosiervorrichtung (7), die den Durchfluß des Trockenschlamms durch dessen zum Mischer (3) führende Zuleitung (5) in Abhängigkeit von einer Temperaturmeßstelle steuert, und einer Steuereinrichtung (6), die mit der Temperaturmeßstelle und der Dosiervorrichtung (7) verbunden ist,
**dadurch gekennzeichnet,** daß die Temperaturmeßstelle zur Erfassung der Temperatur des zu trocknenden Gemisches am Mischer (3) angeordnet ist. Der Mischer wird also mit ungekühltem Trockenschlamm beaufschlagt, so daß der Trockner auf entsprechend geringere Heizleistung ausgelegt werden kann. Außerdem muß der Kühler nur diejenige Menge an Trockenschlamm kühlen, die als Fertigprodukt abgeführt wird. Auch der Kühler kann also auf entsprechend geringere Leistung ausgelegt werden. Außerdem ist es durch die erfindungsgemäße Zumischregelung einfachen Mitteln möglich, Änderungen des Trockensubstanzgehaltes des Dickschlamms durch entsprechende Zudosierung des Trockenschlamms zu kompensieren und damit den Trocknungsvorgang auf optimalem Wirkungsgrad zu halten.

In Weiterbildung der Erfindung wird vorgeschlagen, daß der Trockner als Wirbelschichttrockner ausgebildet ist, dessen Brüden über eine Entstaubungsvorrichtung geführt und z.T. rezirkuliert werden, und daß die Entstaubungsvorrichtung an den Mischer angeschlossen ist. Der bei der Trocknung anfallende Staub wird also für die Rückpuderung eingesetzt, so daß eine gesonderte Weiterbehandlung überflüssig wird.

Vorzugsweise ist der Kühler als Wirbelschichtkühler ausgebildet und über eine Lufteinlaßleitung mit einem Dickschlamm-Reservoir sowie über eine Luftauslaßleitung mit einer Entstaubungsvorrichtung verbunden, wobei die Entstaubungsvorrichtung an den Mischer angeschlossen ist. Auch der bei der Kühlung anfallende Staub dient also der Rückpuderung, wobei als Wirbelschichtmedium für den Kühler die aus dem Dickschlamm-Reservoir abgesaugte Aspirationsluft Verwendung findet. Dies führt zu einer entsprechenden Verminderung der zu entsorgenden Luftmenge.

Als erfindungswesentlich offenbart gelten auch solche Kombinationen der erfindungsgemäßen Merkmale, die von den vorstehend diskutierten Verknüpfungen abweichen.

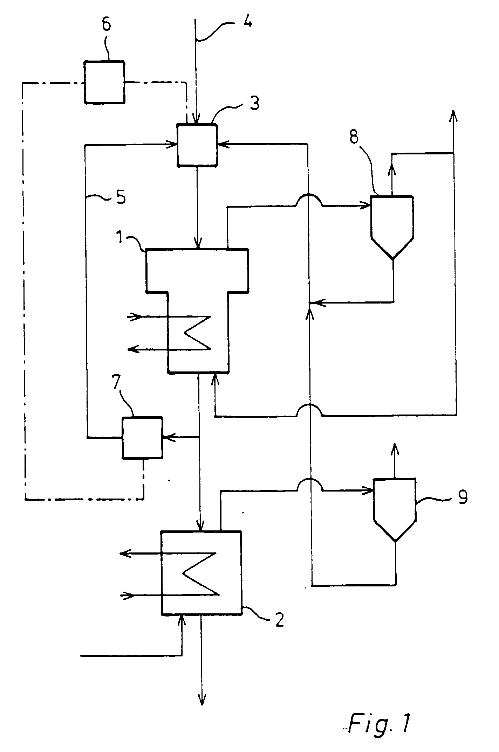

Im folgenden wird die Erfindung anhand eines bevorzugten Ausführungsbeispiels im Zusammenhang mit der beiliegenden Zeichnung näher erläutert. Die Zeichnung zeigt eine schematische Darstellung einer erfindungsgemäßen Anlage.

Die Anlage weist als Hauptkomponenten einen Wirbelschichttrockner 1 und einen Wirbelschichtkühler 2 auf. Dem Wirbelschichttrockner 1 ist ein Mischer 3 vorgeschaltet, der über eine Zuleitung 4 mit Dickschlamm beschickt wird, und zwar in der Regel über massenstromgeregelte Dickstoffpumpen. Dieser Dickschlamm wird mit ungekühltem Trockenschlamm gemischt, wobei letzterer dem Mischer 3 über eine Zuleitung 5 zugeführt wird, welche zwischen dem Wirbelschichttrockner 1 und dem Wirbelschichtkühler 2 abzweigt.

Der Dickschlamm wird dem Mischer 3 mit einem Trockensubstanzgehalt von 25 Masse-% zugeführt. Der in den Mischer 3 geförderte, heiße Trockenschlamm besitzt einen Trockensubstanzgehalt von 95 Masse-%. Die Förderung des Trockenschlamms wird so eingestellt, daß der Wirbelschichtrockner 1 ein Gemisch mit einem Trockensubstanzgehalt von bevorzugt 75 Masse-% erhält. Bezogen auf die zum Wirbelschichtkühler 2 gelangende Trockensubstanz, wird etwa die 10-fache Menge durch die Zuleitung 5 rezirkuliert. Verglichen mit einer Anlage, bei der die Rezirkulationsmenge nach dem Kühler abgezweigt wird, kann der Wirbelschichtkühler 2 erfindungsgemäß um ca. 90% schwächer ausgelegt werden. Hinzu kommt, daß die Heizleistung des Wirbelschichttrockners 1 reduziert werden kann, da der rezirkulierte Trockenschlamm bereits auf Trocknungstemperatur, nämlich auf ca. 120°C erwärmt ist.

Die erfindungsgemäße geregelte Rezirkulation des heißen Trockenschlamms bietet ferner die besonders vorteilhafte Möglichkeit, den Trocknungsprozeß mit einfachsten Mitteln optimal zu steuern. Hierzu dient eine Steuereinrichtung 6, die mit einer Temperaturmeßstelle im Mischer 3 sowie mit einer Dosiervorrichtung 7 in der Zuleitung 5 verbunden ist. Durch Erfassung der Temperatur im Mischer 3 und entsprechende Steuerung der Dosiervorrichtung 7 läßt sich der Trockensubstanzgehalt des dem Wirbelschichttrockner 1 zugeführten Gemisches konstant halten, wodurch die unvermeidbaren Schwankungen des Trockensubstanzgehaltes des Dickschlamms kompensiert werden. Der TemperaturSchwankungsbereich beträgt ca. 5 - 8°C.

Die im Wirbelschichtrockner 1 anfallenden Brüden werden einer Entstaubungsvorrichtung 8 zugeführt. Ein Teil der entstaubten Brüden wird als Wirbelschichtmedium in den Wirbelschichttrockner 1 zurückgeleitet. Der Rest der Brüden wird entsorgt. Der in der Entstaubungsvorrichtung 8 anfallende Staub wird in den Mischer 3 gefördert und dementsprechend in den Rückpuderungsschritt eingebunden.

Als Wirbelschichtmedium für den Wirbelschichtkühler 2 wird Aspirationsluft verwendet, die aus einem nicht dargestellten Dickschlammsilo abgesaugt worden ist, allerdings nur solange, wie der Methangehalt der Aspirationsluft einen Sicherheitsgrenzwert nicht überschreitet. Anderenfalls wird auf Umgebungsluft umgeschaltet. Die aus dem Wirbelschichtkühler 2 austretende staubhaltige Luft wird einer Entstaubungsvorrichtung 9 zugeleitet und anschließend entsorgt. Der aus der Entstaubungsvorrichtung 9 stammende Staub wird ebenfalls in den Mischer 3 eingeleitet und damit in das Schlammgranulat eingebunden, welches in den Wirbelschichttrockner 1 gelangt.

Die Entstaubung des Trockenschlamms spielt im Hinblick auf den Explosionsschutz eine wesentliche Rolle. Die erfindungsgemäße Rezirkulation des Staubes läßt eine sonst erforderliche Feinstaub-Bevorratung ggf. mit vorgeschalteter Siebung entfallen. Der Mischer 3 kann im übrigen zur Aufnahme sonstigen Staubes dienen, der im weiteren Behandlungsverlauf anfällt.

Im Rahmen der Erfindung sind ohne weiteres Abwandlungsmöglichkeiten gegeben. Zwar sind Wirbelschichtaggregate für die Trocknung und Kühlung ganz besonders vorteilhaft, jedoch sind andere Bauarten ebenfalls denkbar. Ferner kann auch mit abweichenden Wirbelschichtmedien gearbeitet werden. Die wesentlichen Vorteile der Prozeßführung und -steuerung sind unabhängig von der Staubrezirkulation, wenn auch letztere einen beträchtlichen Beitrag zur Explosionssicherheit und Wirtschaftlichkeit leistet.

## Patentansprüche

1. Verfahren zum Behandeln von Schlamm, insbesondere von Klärschlamm, wobei
- mechanisch vorentwässerter Dickschlamm mit Trockenschlamm gemischt,
- das Gemisch zu Trockenschlamm getrocknet und
- ein Teil des ungekühlten Trockenschlamms in temperaturgesteuerter Menge zur Mischung mit dem Dickschlamm rezirkuliert wird,
**dadurch gekennzeichnet,**
- daß der Trockensubstanzgehalt des Dickschlamms durch Messung der Temperatur des zu trocknenenden Gemisches erfaßt wird und
- daß zur Kompensation von Schwankungen im Trockensubstanzgehalt des Dickschlamms die Steuerung der Rezirkulationsmenge des ungekühlten Trockenschlamms in Abhängigkeit von der erfaßten Temperatur des zu trocknenden Gemisches durchgeführt wird.

2. Verfahren nach Anspruch 1, dadurch gekennzeichnet, daß dem Dickschlamm oder dem zu trocknenden Gemisch außerdem Staub, vorzugsweise Feinstaub, beigemischt wird, der bei der Schlammbehandlung anfällt.

3. Verfahren nach Anspruch 1 oder 2, dadurch gekennzeichnet, daß das Gemisch in einer Wirbelschicht oder einer Trommel getrocknet wird und daß der Trockenschlamm direkt nach der Trocknung einen Feinstaubgehalt von < 20 Masse-% < 500µ aufweist.

4. Verfahren nach Anspruch 3, dadurch gekennzeichnet, daß der Staub aus dem Kreislaufmedium der Wirbelschicht oder der Trommel entnommen und dem Dickschlamm oder dem zu trocknenden Gemisch beigemischt wird.

5. Verfahren nach Anspruch 3 oder 4, dadurch gekennzeichnet, daß als Kreislaufmedium für die Trocknung ein Teil der bei der Trocknung anfallenden, entstaubten Brüden rezirkuliert wird.

6. Verfahren nach einem der Ansprüche 2 bis 5, dadurch gekennzeichnet, daß bei Durchführung einer der Trocknung nachgeschalteten Kühlung in einer Wirbelschicht der Staub aus dem Wirbelschichtmedium entnommen und damit eine weitere Reduzierung des Feinstaubgehaltes erreicht wird.

7. Verfahren nach Anspruch 6, dadurch gekennzeichnet, daß als Wirbelschichtmedium für die Kühlung die aus dem mechanisch vorentwässerten Dickschlamm anfallende Aspirationsluft verwendet wird.

8. Anlage zum Behandeln von Schlamm, insbesondere von Klärschlamm, mit
- mindestens einem Mischer (3), der eine Zuleitung (4) für mechanisch vorentwässerten Dickschlamm und eine Zuleitung (5) für Trockenschlamm aufweist,
- einem dem Mischer (3) nachgeschalteten Trockner (1),
- einer Dosiervorrichtung (7), die den Durchfluß des Trockenschlamms durch dessen zum Mischer (3) führende Zuleitung (5) in Abhängigkeit von einer Temperaturmeßstelle steuert, und
- einer Steuereinrichtung (6), die mit der Temperaturmeßstelle und der Dosiervorrichtung (7) verbunden ist,
**dadurch gekennzeichnet**,
daß die Temperaturmeßstelle zur Erfassung der Temperatur des zu trocknenden Gemisches am Mischer (3) angeordnet ist.

9. Anlage nach Anspruch 8, dadurch gekennzeichnet, daß der Trockner (1) als Wirbelschicht- oder Trommeltrockner ausgebildet ist, dessen Brüden über eine Entstaubungsvorrichtung (8) geführt und zum Teil rezirkuliert werden, und daß die Entstaubungsvorrichtung an den Mischer (3) angeschlossen ist.

10. Anlage nach Anspruch 8 oder 9, dadurch gekennzeichnet, daß bei Verwendung eines dem Trockner (1) nachgeschalteten Kühlers (2) dieser als Wirbelschichtkühler ausgebildet und über eine Lufteinlaßleitung mit einem Dickschlamm-Reservoir sowie über eine Luftauslaßleitung mit einer Entstaubungsvorrichtung (9) verbunden ist, wobei die Entstaubungsvorrichtung an den Mischer (3) angeschlossen ist.

## Claims

1. Process for the treatment of slurry, especially of clarified slurry, wherein
- mechanically preliminarily dried turbid slurry is mixed with dried slurry,
- the mixture is dried to be dried slurry, and
- a part of the uncooled dried slurry is recirculated in temperature-controlled amount for mixing with the turbid slurry,
characterised thereby
- that the dry substance content of the turbid slurry is detected by measurement of the temperature of the mixture to be dried, and
- that for compensation for fluctuations in the dry substance content of the turbid slurry the control of the recirculation quantity of the uncooled dried slurry is carried out in dependence on the detected temperature of the mixture to be dried.

2. Process according to claim 1, characterised thereby that in addition dust, preferably fine dust, which arises during the slurry treatment is admixed to the turbid slurry or to the mixture to be dried.

3. Process according to claim 1 or 2, characterised thereby that the mixture is dried in a fluidised bed or a drum and that the dried slurry has a fine dust content of < 20 mass %<500µ directly after the drying.

4. Process according to claim 3, characterised thereby that the dust is removed from the circulation medium of the fluidised bed or the drum and admixed to the turbid slurry or to the mixture to be dried.

5. Process according to claim 3 or 4, characterised thereby that a part of the vapour, which arises during the drying and from which dust is removed, is recirculated as circulation medium for the drying.

6. Process according to one of claims 2 to 5, characterised thereby that during performance of a cooling, which follows the drying, in a fluidised bed the dust is removed from the fluidised bed medium and a further reduction in the fine dust content is thereby achieved.

7. Process according to claim 6, characterised thereby that the aspiration air arising from the mechanically preliminarily dried turbid slurry is used as fluidised bed medium for the cooling.

8. Plant for the treatment of slurry, especially clarified slurry, with
- at least one mixer (3), which has a duct (4) for mechanically preliminarily dried turbid slurry and a duct (5) for dried slurry,
- a drier (1) connected downstream of the mixer (3),
- a metering device (7), which controls the throughflow of the dried slurry through the duct (5) thereof leading to the mixer (3) in dependence on a temperature measuring point, and
- a control equipment (6) which is connected with the temperature measuring point and the metering device (7),
characterised thereby
that the temperature measuring point is arranged for detection of the temperature of the mixture, which is to be dried, at the mixer (3).

9. Plant according to claim 8, characterised thereby that the drier (1) is constructed as a fluidised bed drier or drum drier, the vapours of which are conducted by way of a dust removal device (8) and in part recirculated, and that the dust removal device is connected to the mixer (3).

10. Plant according to claim 8 or 9, characterised thereby that on use of a cooler connected downstream of the drier (1) the former is constructed as a fluidised bed cooler and connected by way of an air inlet duct with a turbid slurry reservoir as well as by way of an air outlet duct with a dust removal device (9), wherein the dust removal device is connected to the mixer (3).

## Revendications

1. Procédé pour le traitement de boues, en particulier de boues de curage, où
- des boues épaisses prédéshydratées mécaniquement sont mélangées à des boues sèches,
- le mélange est séché en boues sèches et
- une partie des boues sèches non refroidies est remise en circulation en une quantité réglée par la température pour un mélange avec les boues épaisses,
caractérisé en ce que,
- la teneur en substance sèche dans les boues épaisses est détectée par mesure de la température du mélange à sécher et
- en ce que pour la compensation des variations de la teneur en substance sèche des boues épaisses, le réglage de la quantité de recirculation des boues sèches non refroidies est accompli selon la température détectée du mélange à sécher.

2. Procédé selon la revendication 1, caractérisé en qu'on mélange, par ailleurs, aux boues épaisses ou bien au mélange à sécher, des poussières, avantageusement des poussières fines qui sont produites lors du traitement des boues.

3. Procédé selon la revendication 1 ou 2, caractérisé en ce que le mélange est séché en une couche tourbillonnante dans un tambour et en ce que les boues séchées présentent, juste après le séchage, une teneur en poussières fines de < 20 % en poids < 500µ.

4. Procédé selon la revendication 3, caractérisé en ce que les poussières sont prélevées du milieu de recyclage de la couche tourbillonnante ou bien du tambour et sont mélangées aux boues épaisses ou bien au mélange à sécher.

5. Procédé selon la revendication 3 ou 4, caractérisé en ce qu'en tant que milieu de recyclage pour le séchage, on remet en circulation une partie des fumées dépoussiérées se produisant lors du séchage.

6. Procédé selon l'une des revendications 2 à 5, caractérisé en ce que dans l'accomplissement d'un refroidissement subséquent au séchage dans une couche tourbillonnante, la poussière est prélevée du milieu de la couche tourbillonnante et on obtient ainsi une autre réduction de la teneur en poussières fines.

7. Procédé selon la revendication 6, caractérisé en ce qu'on utilise en tant que milieu de couche tourbillonnante pour le refroidissement, l'air d'aspiration se présentant lors de la prédéshydratation mécanique des boues épaisses.

8. Installation pour le traitement des boues, en particulier des boues de curage, avec
- au moins un mélangeur (3), qui présente une conduite d'amenée (4) pour les boues épaisses prédéshydratées mécaniquement et une conduite d'amenée (5) pour les boues sèches,
- un sécheur (1) suivant le mélangeur (3),
- un dispositif de dosage (7), qui règle le débit des boues sèches par leur conduite (5) conduisant au mélangeur (3) selon une mesure de température, et
- un dispositif de commande (6), qui est relié au point de mesure de température et au dispositif de dosage (7),
caractérisé en ce que,
le point de mesure de température est agencé pour détecter la température du mélange à sécher dans le mélangeur (3).

9. Installation selon la revendication 8, caractérisée en ce que le sécheur (1) est configuré en tant que sécheur à couche tourbillonnante ou à tambour dont les fumées sont conduites par un dispositif de dépoussiérage (8) et sont partiellement remises en circulation, et en ce que le dispositif de dépoussiérage est raccordé au mélangeur (3).

10. Installation selon la revendication 8 ou 9, caractérisé en que lors de l'utilisation d'un refroidisseur (2) suivant le sécheur (1), celui-ci est configuré comme un refroidisseur à couche tourbillonnante et est relié par une conduite d'entrée d'air d'un réservoir de boues épaisses ainsi que par une conduite de sortie d'air à un dispositif de dépoussiérage (9), le dispositif de dépoussiérage étant raccordé au mélangeur (3).
